# EUROPEAN PATENT SPECIFICATION

(11) **EP 2 682 656 B1**
(45) Date of publication and mention of the grant of the patent: **27.05.2015**
(21) Application number: 13172543.4
(22) Date of filing: 18.06.2013
(51) Int. Cl.: F16L 3/10

(54) **Pipe clip with spring washer**
Rohrschelle mit Federscheibe
Collier de serrage de tuyau doté d'une rondelle élastique

(30) Priority: 02.07.2012 NL 2009103
(43) Date of publication of application: 08.01.2014
(73) Proprietor: J. van Walraven Holding B.V., 3641 RK Mijdrecht (NL)
(72) Inventor: van Walraven, Jan, 3641 GP Mijdrecht (NL); Juzak, Marek, 3641 ZS Mijdrecht (NL)
(74) Representative: EP&C

(56) References cited:
- EP-A1- 0 462 052
- EP-A1- 0 471 989
- EP-A1- 1 033 502
- EP-A1- 1 978 288
- EP-A2- 1 933 072
- WO-A1-2012/002803
- WO-A1-2012/134278
- DE-A1- 4 015 404

## Description

The present invention relates to a pipe clip for fastening a pipe to a wall, ceiling or another support, comprising:
- an annular clip body with an opening for attaching the pipe clip around the pipe, which opening is delimited by a first and a second end of the clip body, a first and second flange being monolithically formed with the clip body at the first and second end respectively and extending in a radial direction,
- a male fastening element comprising a head and a shank, the shank being associated with the first end and the head engaging the second end of the clip body for tightening the first and second end of the clip body together in a mounted state, and
- a washer with an opening for the shank of the male fastening element,
wherein the second flange is provided with an opening adapted to allow the head of the male fastening element to pass through, and
wherein said washer in a mounted state of the pipe clip engages on one side the second flange in an area surrounding said opening in the second flange and engages on an opposite side the head of the male fastening element.

In EP 1 933 072 A2 a pipe clip is disclosed which has a swivelling retaining plate with a slot open on one end. The head of the male fastening element pushes against an underside of the swivelling plate which makes it swivel. When the head has passed the edge of the retaining plate, the shank of the male fastening element is introduced in the open slot and the plate grips behind the head, whereby the head cannot be withdrawn anymore through the opening in the flange.

It is an object of the invention to provide an alternative solution.

This object is achieved according to one aspect of the invention by a pipe clip of the type mentioned in the preamble, wherein in an open state of the pipe clip the washer is pre-mounted as a collar surrounding the shank adjacent the head of the male fastening element, the washer being a resilient part adapted to be subjected to a reduction of its outer diameter upon passing through the opening in the second flange with the head of the male fastening element and adapted to expand again after it has passed through said opening so as to engage the area surrounding said opening upon tightening together of the first and second end of the clip body.

This aspect of the invention provides a washer mounted to the male fastening element which provides on the one hand a retaining means for retaining the pipe clip in a preliminary closed state after the head of the male fastening element is pushed through. On the other hand, when the ends of the pipe clip body are tightened towards each other by means of the male fastening element, the washer provides a spring washer that prevents loosening of the male fastening element e.g. by vibrations.

In a practical embodiment the pipe clip body is made of metal. It is however also possible to have a pipe clip body made of another suitable material, e.g. plastic.

In a possible embodiment the washer may comprise a base ring and resilient lips extending from said base ring. In a further embodiment, the lips form a flaring collar.

The washer may be attached to the male fastening element in several ways. For example, the shank of the male fastening element may have a male thread and the base ring may be provided with an inner thread adapted to cooperate with the male thread on the shank. In this way the washer can be screwed on the shank of the male fastening element.

Another option is to clamp the base ring portion around the shank of the male fastening element.

Yet another option is that the shank of the male fastening element has a portion with a male thread and a non-threaded portion extending between the head and the threaded portion, wherein the base ring in use is extending coaxially with said non-threaded portion. In such an embodiment the base ring portion may be slided over the shank of the male fastening element, before the thread is made. Thus, the base ring portion is slided over a smooth surface towards the head. When the washer is in place adjacent the head, the shank portion not covered by the base ring can be provided with the thread. The thread gives the shank a slightly larger diameter, whereby the base ring portion is retained in its position adjacent the head.

It is also conceivable to attach the washer to the shank by other suitable means, e.g. by using an adhesive or welding.

The washer may be made of any suitable material which provides the resiliency and the strength for the retaining function. Preferably, the washer is made from metal. However, it is also conceivable to make the washer from plastic. In particular it is conceivable to make the washer as a composite part of metal and plastic I the latter case metal elements may be embedded in a plastic part made by injection moulding, wherein the plastic parts provided the necessary resiliency and the metal elements provide the necessary strength.

Another aspect of the invention proposes a pipe clip of the type mentioned in the preamble, wherein
the washer is mounted to the second flange,
the washer in the mounted state of the pipe clip surrounds the shank of the male fastening element, and
the washer is a resilient part having an opening, adapted to resiliently expand from an original dimension to a dimension which allows the head of the male fastening to pass through and adapted to resiliently return to the original dimension again such that the washer engages behind said head when the head has passed through.

This aspect of the invention provides a washer mounted to the second flange of the pipe clip body which provides on the one hand a retaining means for retaining the pipe clip in a preliminary closed state after the head of the male fastening element is pushed through said washer. On the other hand, when the ends of the pipe clip body are tightened towards each other by means of the male fastening element, the washer engages the head of the male fastening element and forms a spring washer that prevents loosening of the male fastening element e.g. by vibrations.

In a practical embodiment the pipe clip body is made of metal. It is however also possible to have a pipe clip body made of another suitable material, e.g. plastic.

In a possible further embodiment the washer may comprise a base ring and resilient lips extending from said base ring. The base ring is used to mount the washer to the second flange, and the resilient lips define with their ends an opening which is expanded when the the head of the male fastening element is pushed through it. In a possible embodiment the resilient lips are flaring inwardly from the base ring.

In a possible embodiment the resilient lips form a segmented conical ring, which has a concave side which is turned to the second flange and which in use is engaged by the head of the male fastening element when said head is passing through the opening in the second flange and through the washer.

The washer may be attached in several ways to the second flange.

In one embodiment the washer is attached to an edge of the opening in the second flange. To that end the base ring may have a portion that extends through the opening in the second flange. The opening in the second flange may for example be provided with an inner thread, and said base ring portion of the washer may be provided with a male thread adapted to cooperate with said inner thread.

Another possibility is to provide the base ring portion with one or more outwardly extending lugs which engage behind the edge of the opening in the second flange when the base ring portion is inserted in said opening, e.g. by a snap fit, so as to secure the base ring in said opening.

It is also possible that the base ring portion has an outer diameter which snuggly fits in the opening in the second flange.

In another embodiment the base ring, preferably plate shaped, may be attached to an edge of the flange instead of the opening in the flange. To this end the base ring may be provided with gripping formations which grip around one or more edges of the flange. The edge of the flange may be provided with recesses to receive such gripping formations.

In yet another aspect of the invention proposes a pipe clip of the type mentioned in the preamble, wherein
the washer is a portion of the second flange monolithically formed therewith,
the washer in the mounted state of the pipe clip surrounds the shank of the male fastening element, and
the washer has a resilient portion having an opening, adapted to resiliently expand from an original dimension to a dimension which allows the head of the male fastening element to pass through and adapted to resiliently return to the original dimension again such that the washer engages behind said head when the head has passed through.

This aspect of the invention provides an integrally formed washer on the second flange of the pipe clip body which provides on the one hand a retaining means for retaining the pipe clip in a preliminary closed state after the head of the male fastening element is pushed through said washer. On the other hand, when the ends of the pipe clip body are tightened towards each other by means of the male fastening element, the washer engages the head of the male fastening element and forms a spring washer that prevents loosening of the male fastening element e.g. by vibrations.

In a possible embodiment the washer comprises a plate, wherein resilient lips are formed which extend radially inward, wherein the free ends of said lips define the opening in the washer for the shank of the male fastening element. Preferably, the plate is an extension of the second flange which is folded over the second flange, such that the opening in the washer and the opening in the second flange are aligned.

In a practical embodiment the pipe clip body is made of metal. It is however also possible to have a pipe clip body made of another suitable material, e.g. plastic.

In a particular practical embodiment at least the portion of the pipe clip where the second flange is formed is made of a resilient metal, e.g. spring steel. Hereby the necessary resiliency is provided for allowing the head of the male fastening element to be pushed through the washer.

In a particular practical embodiment, the pipe clip body comprises two pipe clip halves, wherein the pipe clip half at which the second flange is formed is made of a resilient metal, preferably spring steel.

The different aspects of the invention will be described in more detail in the following description with reference to the drawings, in which:
Fig. 1 shows a view in perspective of an embodiment of a pipe clip according to an aspect of the invention in an open state of the pipe clip,
Fig. 2 shows a view in perspective of the pipe clip of Fig. 1 in a closed state,
Fig. 3a shows a possible embodiment of a washer used in a pipe clip of Fig. 1,
Fig. 3b shows the washer of Fig. 3a in several intermediate states during manufacturing,
Fig. 4 shows a view in perspective of an embodiment of a pipe clip according to another aspect of the invention in an open state of the pipe clip,
Fig. 5 shows a view in perspective of the pipe clip of Fig. 4 in a closed state,
Fig. 6 shows a possibility to attach a washer to the second flange of a pipe clip of Fig. 4,
Fig. 7 shows another possibility to attach a washer to the second flange of a pipe clip of Fig. 4,
Fig. 8 shows a washer which can be attached in yet another way to the second flange of the pipe clip of Fig. 4,
Fig. 9 shows a view in perspective of an embodiment of a pipe clip according to a second aspect of the invention in an open state of the pipe clip,
Fig. 10 shows a view in perspective of the pipe clip of Fig. 9 in a closed state,
Fig. 11 shows a view in perspective of a pipe clip half of the pipe clip of Fig. 9 on which the washer has not been mounted yet,
Fig. 12 shows a view in perspective from below of a washer used in the pipe clip of Fig. 9,
Fig. 13 shows a view in perspective of an embodiment of a pipe clip according to yet another aspect of the invention in an open state of the pipe clip,
Fig. 14 shows a view in perspective of the pipe clip of Fig. 13 in a closed state, and
Fig. 15 shows a view in perspective of a pipe clip half of the pipe clip of Fig. 13 in an intermediate state during manufacturing.

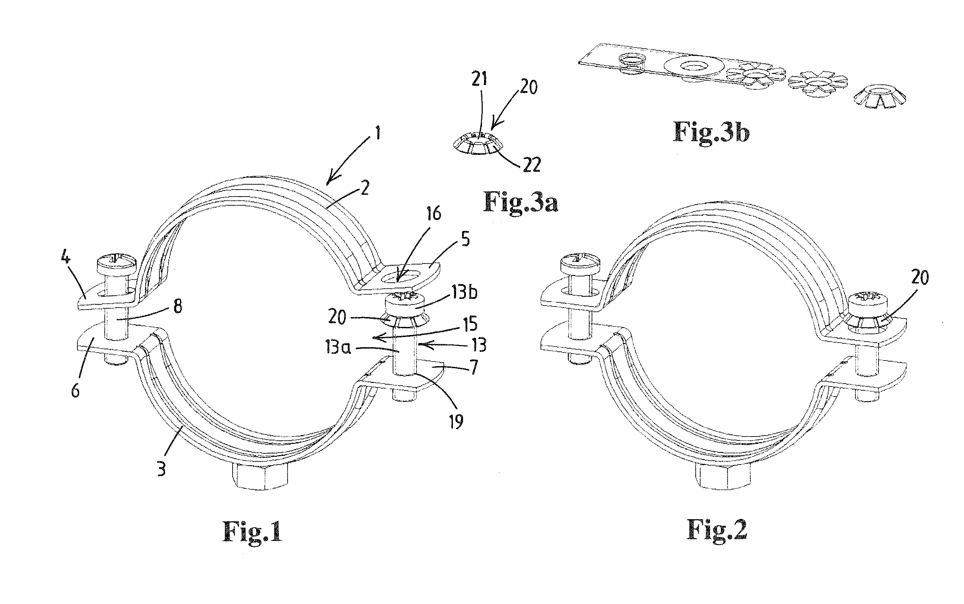

In Fig. 1 is shown a pipe clip 1 having an annular pipe clip body. The pipe clip body comprises two pipe clip halves 2 and 3 respectively, which are preferably formed out of metal. The first clip half 2 is provided at both ends with an integral radial outwardly extending flange 4 and 5 respectively. The second clip half 3 is formed with at both ends an integral radial outwardly extending flange 6 and 7 respectively. When fitted, the flange 4 of the first clip half 2 opposes the flange 6 of the second clip half 3, and the flange 5 of the first clip half 2 opposes the flange 7 of the second clip half 3.

The flanges 4 and 6 are connected by a screw 8, whereby a hinging connection is constituted such that the clip body can be opened to introduce a pipe (not shown) in the pipe clip 1. The flanges 5 and 7 thus define an opening 15 through which the pipe can be introduced. In line with the terminology in the claims, in the following the flange 7 will be referred to as the first flange and the flange 5 will be referred to as the second flange.

The first flange 7 is provided with a hole 19 (cf. Fig. 1) for passing through the shank of the male fastening element 13. The male fastening element 13 is preferably a screw with a head 13b and a male thread on its shank 13a.The hole 19 in the first flange 7 is preferably provided with an inner thread which cooperates with the thread on the shank 13a of the screw 13.

The second flange 5 is provided with an opening 16. The opening 16 has a diameter such that the head 13b of the screw 13 can pass through it.

Adjacent the head 13b a washer 20 is arranged around the shank 13a as a sort of collar. In the drawing the washer is located below the head 13b. The washer 20 comprises in the shown embodiment a base ring 21 and a plurality of resilient lips 22 which extend radially outward. The lips 22 extend under a sharp angle with the centre axis of the base ring 21. When the washer 20 is arranged around the shank 13a of the screw 13, the free end of the resilient lips 22 is facing away from the head 13b of the screw 13. The lips 22 thus form a flaring collar below the head 13b. The circumference of the collar of lips 22 at its end remote from the head 13b has a diameter which is larger than the diameter of the head 13b and larger than the diameter of the opening 16 in the second flange 5.

When the pipe clip 1 is brought from an open state (Fig. 1) to a closed state (Fig. 2), the head 13b is moved through the opening 16. At some point the lips 22 of the collar will engage the edge of the opening 16. Due to the pressure subjected by said edge to the lips 22, the lips 22 will resiliently flex inward to a smaller diameter, such that the collar of lips 22 can pass through the opening 16. When the lips 22 have passed the opening 16, they will resiliently flex back to their original position and the ends of the diametrical opposite lips 22 will have a larger mutual distance than the diameter of the opening 16. Thereby the lips 22 cannot be moved back through the opening 16 and thus the pipe clip is retained in a pre-mounting closed state (see Fig. 2). From this state the screw 13 can be tightened and thereby the pipe clip 1 can be tightened around the pipe (not shown). The head 13b will press the lips 22 into engagement with the area of the flange 5 surrounding the opening 16.

The washer 20 can be attached to the male fastening element 13 in several ways.

In one possible embodiment the base ring is provided with an inner thread adapted to cooperate with the male thread on the shank 13a of the male fastening element. In this embodiment the washer is simply screwed on the shank 13b to a position just adjacent the head 13b.

In another possible embodiment the base ring 21 may be clamped around the shank of the male fastening element. Thereto it is possible to give the base ring an inner diameter which corresponds to the outer diameter of the shank. The base ring may in this embodiment be provided with an axially extending slit, such that the base ring 21 may be expanded to slide it over the shank 13a towards the head 13b. Another possibility is to slide the ring over the shank 13a, before the thread is made. Thus, the base ring 21 is slided over a smooth surface towards the head 13b. When the washer is in place adjacent the head 13b, the shank portion not covered by the base ring 21 can be provided with the thread. The thread gives the shank 13a a slightly larger diameter, whereby the base ring 21 is retained in its position adjacent the head 13b.

It is also conceivable to attach the washer to the shank 13a by using an adhesive, welding or another suitable method.

The washer 20 may be made from metal, for example punched and formed out of metal strip material as is illustrated in Fig 3b.

It is also possible to make the washer 20 from plastics material, e.g. by injection moulding. Another possibility is to make the washer 20 by injection moulding from plastic with metal elements embedded in the plastic. It is for example conceivable to provide the lips 22 with metal inserts, which ensure that the head 13b of the male fastening element 13 cannot be retracted through the opening 16, even if the plastic would be damaged.

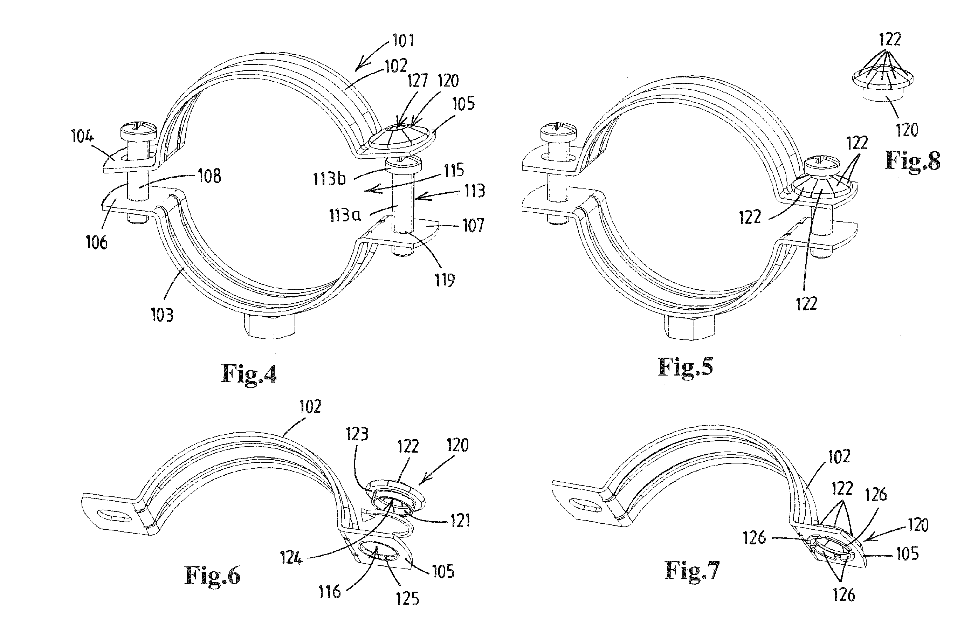

In Fig. 4 is shown a pipe clip 101 having an annular pipe clip body. The pipe clip body comprises two pipe clip halves 102 and 103 respectively, which are preferably formed out of metal. The first clip half 102 is provided at both ends with an integral radial outwardly extending flange 104 and 105 respectively. The second clip half 103 is formed with at both ends an integral radial outwardly extending flange 106 and 107 respectively. When fitted, the flange 104 of the first clip half 102 opposes the flange 106 of the second clip half 103, and the flange 105 of the first clip half 102 opposes the flange 107 of the second clip half 103.

The flanges 104 and 106 are connected by a screw 108, whereby a hinging connection is constituted such that the clip body can be opened to introduce a pipe (not shown) in the pipe clip 101. The flanges 105 and 107 thus define an opening 115 through which the pipe can be introduced. In line with the terminology in the claims, in the following the flange 107 will be referred to as the first flange and the flange 105 will be referred to as the second flange.

The first flange 107 is provided with a hole 119 (cf. Fig. 4) for passing through the shank of the male fastening element 113. The male fastening element 113 is preferably a screw with a head 113b and a male thread on its shank 113a.The hole 119 in the first flange 107 is preferably provided with an inner thread which cooperates with the thread on the shank 113a of the screw 113.

The second flange 105 is provided with an opening 116 (see Fig. 6). The opening 116 has a diameter such that the head 113b of the screw 113 can pass through it.

A washer 120 is mounted to the second flange 105. The washer 120 has a base ring portion 121 with a radial flange 123. Resilient lips 122 are formed which extend from the radial flange 123 radially inward and under a sharp angle with the centre axis of the base ring portion 121. Thus the resilient lips 122 form a segmented conical ring, which has a concave side 124 which is turned to the second flange 105 and which in use is engaged by the head 113b of the male fastening element 113 when said head 113b is passing through the washer 120.

The free ends of the lips 122 define an opening 127 through which the shank 113a of the male fastening can extend (cf. Fig. 5). In the mounted state of the pipe clip the washer 120 surrounds the shank 113a of the male fastening element 113. When the head 113b of the male fastening element is pushed through the washer 120, the opening 127 is resiliently expanded from its original dimension, shown in Fig. 4, to a dimension which allows the head 113b of the male fastening 113 to pass through. When the head 113b has passed the lips resiliently flex back (cf. Fig. 5) such that the washer 120 engages behind said head 113b.

The base ring portion 121 can be attached to the second flange 105 in several ways.

In one embodiment, which is illustrated in Fig. 6, the opening 116 is defined by a surface provided with an inner thread 125. The base ring portion 121 of the washer 120 can be provided with a male thread which cooperates with the thread 125 of the opening 116 to attach the washer 120 to the second flange 105.

In another embodiment, which is illustrated in Fig. 7, the base ring portion 121 of the washer 120 has at its free end lugs 126 with an outwardly extending portion which engage behind the edge of the opening 116 in the second flange 105 when the base ring portion 121 is inserted in said opening 116. This can be done by a snap fit mechanism, so as to secure the base ring portion 121 in said opening 116. Another option is to have lugs that are initially in line with the base ring portion 121 and are, after the base ring portion 121 has been inserted in the opening 116, bent outwardly so as to engage behind the edge of the opening 116 and fix the washer 120 to the flange 105.

In another embodiment, shown in Fig. 8, the base ring portion 121 is a cylindrical body that has an outer diameter that narrowly fits in the opening 116. The base ring portion 121 is then fitted in the opening and clamps itself in the opening 116 of the second flange 105.

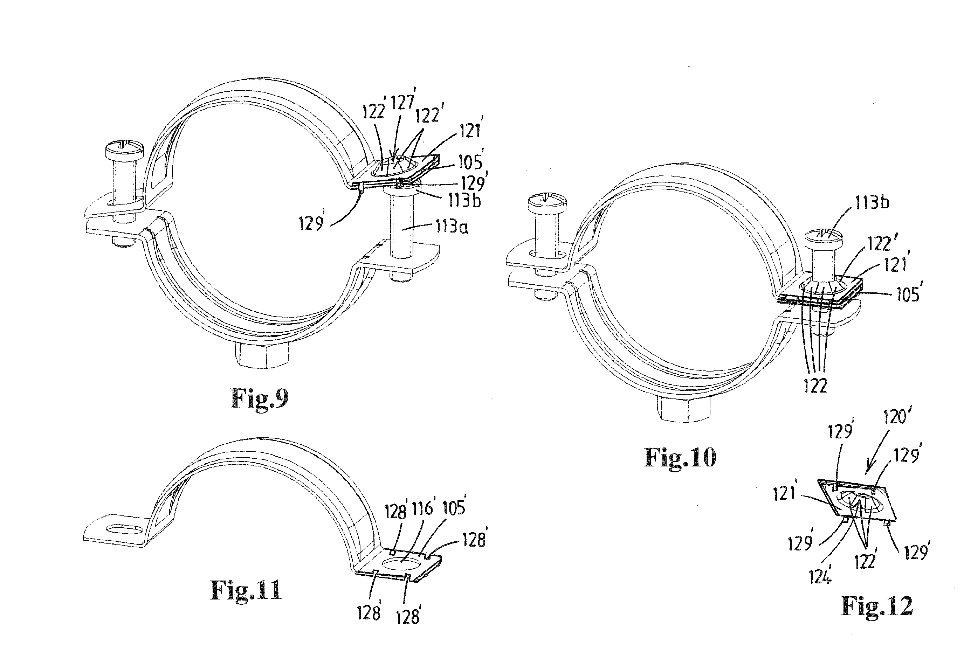

In another embodiment, which is shown in Figs 9 - 12, the washer 120' comprises a flat plate which constitutes the base ring portion 121'. Resilient lips 122' are formed which extend from the plate 121' radially inward and under a sharp angle with the centre axis of the base ring portion 121'. Thus the resilient lips 122' form a segmented conical ring, which has a concave side 124' which is turned to the second flange 105' and which in use is engaged by the head 113b of the male fastening element 113 when said head 113b is passing through the washer 120'.

The pipe clip of Figs 9 and 10 is generally the same as the one shown in Figs 4 and 5. The only difference is that the second flange 105' is provided with recesses 128' in the lateral edges of the flange 105'. The base ring 121' of the washer 120' is provided with lugs 129' at its edge. The lugs 129' be inserted in the recesses 128' to fix the washer 120' on the second flange 105'. Furthermore, the opening 116' in the second flange can be of a smaller dimension than in the embodiments of Figs 4 - 8. This is because the washer 120' is not fixed to the second flange 105' in the opening 116', but has separate fixing means 128', 129'. Result is that the flange as such is stronger.

The washer 120' can be made of metal, but also of plastic material. It is also conceivable to assemble it of a metal part combined with a plastic part.

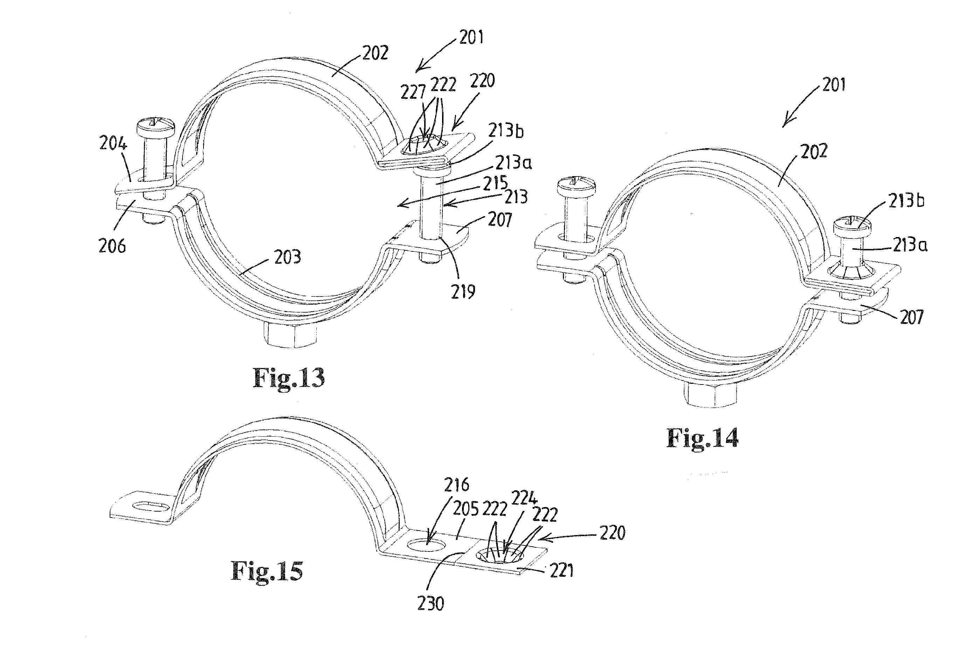

In Figs 13 and 14 is shown a pipe clip 201 having an annular pipe clip body. The pipe clip body comprises two pipe clip halves 202 and 203 respectively, which are preferably formed out of metal. The first clip half 202 is provided at both ends with an integral radial outwardly extending flange 204 and 205 respectively. The second clip half 203 is formed with at both ends an integral radial outwardly extending flange 206 and 207 respectively. When fitted, the flange 204 of the first clip half 202 opposes the flange 206 of the second clip half 203, and the flange 205 of the first clip half 202 opposes the flange 207 of the second clip half 203.

The flanges 204 and 206 are connected by a screw 208, whereby a hinging connection is constituted such that the clip body can be opened to introduce a pipe (not shown) in the pipe clip 201. The flanges 205 and 207 thus define an opening 215 through which the pipe can be introduced. In line with the terminology in the claims, in the following the flange 207 will be referred to as the first flange and the flange 205 will be referred to as the second flange.

The first flange 207 is provided with a hole 219 (cf. Fig. 13) for passing through the shank of a male fastening element 213. The male fastening element 213 is preferably a screw with a head 213b and a shank 213a provided with a male thread. The hole 219 in the first flange 207 is preferably provided with an inner thread which cooperates with the thread on the shank 213a of the screw 213.

The second flange 205 is provided with an opening 216 (see Fig. 15). The opening 216 has a diameter such that the head 213b of the screw 213 can pass through it.

A washer 220 is integrally formed to the second flange 205. Thereto the metal strip of which the pipe clip half 202 is formed is made of spring steel or another sufficiently resilient metal.

The washer 220 comprises a flat plate which constitutes the base ring portion 221. In a manufacturing stage this base ring portion 221 is formed as an extension of the second flange 205 as is shown in Fig. 15.

In the base ring portion 221 resilient lips 222 are formed which extend from the plate 221 radially inward and under a sharp angle with the centre axis of the base ring portion 221. Thus the resilient lips 222 form a segmented conical ring, which has a concave side 224. The free ends of the lips 222 define an opening 227 through which the shank 213a of the male fastening can extend (cf. Fig. 14).

After the washer 220 is formed it is folded over the folding line 230, such that the washer 220 is located over the second flange 205 as is shown in Figs 13 and 14. The plate 221 now extends substantially parallel to the second flange 205. The concave side 224 of the segmented conical ring is now turned to the second flange 205. In use the concave side 224 is engaged by the head 213b of the male fastening element 213 when said head 213b is passing through the washer 220.

In the mounted state of the pipe clip the washer 220 surrounds the shank 213a of the male fastening element 213. When the head 213b of the male fastening element is pushed through the washer 220, the opening 227 is resiliently expanded from its original dimension, shown in Fig. 13, to a dimension which allows the head 213b of the male fastening element 213 to pass through. When the head 213b has passed, the lips 222 resiliently flex back (cf. Fig. 14) such that the washer 220 engages behind said head 213b.

The opening 216 in the second flange 205 can be of a smaller dimension than in the embodiments of Figs 4 - 8. This is because the washer 220 is not fixed to the second flange 205 in the opening 216, but is a part monolithically formed with the flange 205. Especially when the pipe clip half is made of spring steel or another suitable resilient metal, it is an advantage that the second flange has a smaller opening 216 in it such that it remains stronger.

It is noted that in the above described pipe clip embodiments the hinging connection between the pipe clip halves comprises a screw. It is however to be understood that also other hinging structures may be possible, for example the pipe clip halves having hinge members that cooperate. It is also possible to have a one-piece pipe clip body that simply can be flexed open.

## Claims

1. Pipe clip (1) for fastening a pipe to a wall, ceiling or another support, comprising:
- an annular clip body with an opening (15) for attaching the pipe clip (1) around the pipe, which opening (15) is delimited by a first and a second end of the clip body, a first and second flange (7, 5) being monolithically formed with the clip body at the first and second end respectively and extending in a radial direction,
- a male fastening element (13) comprising a head (13b) and a shank (13a), the shank (13a) being associated with the first end and the head (13b) engaging the second end of the clip body for tightening the first and second end of the clip body together in a mounted state, and
- a washer (20) with an opening for the shank (13a) of the male fastening element (13),
wherein the second flange (5) is provided with an opening (16) adapted to allow the head (13b) of the male fastening element (13) to pass through, and
wherein said washer (20) in a mounted state of the pipe clip (1) engages on one side the second flange (5) in an area surrounding said opening (16) in the second flange (5) and engages on an opposite side the head (13b) of the male fastening element (13),
**characterised in that**,
in an open state of the pipe clip (1), the washer (20) is pre-mounted as a collar surrounding the shank (13a) adjacent the head (13b) of the male fastening element (13), the washer (20) being a resilient part adapted to be subjected to a reduction of its outer diameter upon passing through the opening (16) in the second flange (5) with the head (13b) of the male fastening element (13) and adapted to expand again after it has passed through said opening (16) so as to engage the area surrounding said opening (16) upon tightening together of the first and second end of the clip body.

2. Pipe clip according to claim 1, wherein the washer (20) comprises a base ring (21) and resilient lips (22) extending from said base ring (21), wherein, preferably, the lips (22) form a flaring collar.

3. Pipe clip according to claim 2, having one of the following features:
- the shank (13a) of the male fastening element (13) has a male thread and the base ring (21) is provided with an inner thread adapted to cooperate with the male thread on the shank (13a);
- the base ring (21) is clamped around the shank (13a) of the male fastening element (13);
- the shank (13a) of the male fastening element (13) has a portion with a male thread and a non-threaded portion extending between the head (13b) and the threaded portion, wherein the base ring (21) in use is extending coaxially with said non-threaded portion.

4. Pipe clip according to any one of claims 2 - 3, having one of the following features:
- the washer (20) is made from metal;
- the washer (20) is made from plastic;
- the washer (20) is made as a composite part of metal and plastic.

5. Pipe clip according to any one of claims 1 - 4, wherein the washer (20) is attached to the male fastening element (13), e.g. by clamping, adhesion or welding.

6. Pipe clip (101) for fastening a pipe to a wall, ceiling or another support, comprising:
- an annular clip body with an opening (115) for attaching the pipe clip (101) around the pipe, which opening (115) is delimited by a first and a second end of the clip body, a first and second flange (107, 105; 105') being monolithically formed with the clip body at the first and second end respectively and extending in a radial direction,
- a male fastening element (113) comprising a head (113b) and a shank (113a), the shank (113a) being associated with the first end and the head (113b) engaging the second end of the clip body for tightening the first and second end of the clip body together in a mounted state, and
- a washer (120; 120') with an opening (127; 127') for the shank (113a) of the male fastening element (113),
wherein the second flange (105; 105') is provided with an opening (116; 116') adapted to allow the head (113b) of the male fastening element (113) to pass through, and
wherein said washer (120; 120') in a mounted state of the pipe clip (101) engages on one side the second flange (105; 105') in an area surrounding said opening (116; 116') in the second flange (105; 105') and engages on an opposite side the head (113b) of the male fastening element (113),
**characterised in that**,
the washer (120; 120') is mounted to the second flange (105),
the washer (120; 120') in the mounted state of the pipe clip (101) surrounds the shank (113a) of the male fastening element (113), and
the washer (120; 120') is a resilient part having an opening (127; 127'), adapted to resiliently expand from an original dimension to a dimension which allows the head (113b) of the male fastening element (113) to pass through and adapted to resiliently return to the original dimension again such that the washer (120; 120') engages behind said head (113b) when the head (113b) has passed through.

7. Pipe clip according to claim 6, wherein the washer (120; 120') comprises a base ring (121; 121') and resilient lips (122; 122') extending from said base ring (121; 121'), wherein, preferably, the resilient lips (122) are flaring from the base ring (121).

8. Pipe clip according to any one of claims 6 - 7, wherein the washer (120) is attached to an edge of the opening (116) in the second flange (105).

9. Pipe clip according to any one of claims 6 - 8, wherein the base ring (121) has a portion that extends through the opening (116) in the second flange (105), wherein, preferably, the pipe clip (101) has one of the following features:
- the opening (116) in the second flange (105) is provided with an inner thread (125), and said base ring portion (121) of the washer (120) is provided with a male thread adapted to cooperate with said inner thread (125);
- said base ring portion (121) has one or more outwardly extending lugs (126) which engage behind the edge of the opening (116) in the second flange (105) when the base ring portion (121) is inserted in said opening (116), e.g. by a snap fit, so as to secure the base ring in said opening;
- said base ring portion (121) has an outer diameter which snuggly fits in the opening (116) in the second flange (105).

10. Pipe clip according to claim 7, wherein the base ring (121') is attached to an edge of the flange (105'), wherein, preferably the pipe clip furthermore has one or more of the following features:
- the base ring (121') is provided with gripping formations (129') which grip around one or more edges of the flange (105');
- the base ring (121') is formed as a plate.

11. Pipe clip according to any one of claims 6 - 10, wherein the resilient lips (122) form a segmented conical ring, which has a concave side which is turned to the second flange (105; 105') and which in use is engaged by the head (113b) of the male fastening element (113) when said head (113b) is passing through the washer (120; 120').

12. Pipe clip (201) for fastening a pipe to a wall, ceiling or another support, comprising:
- an annular clip body with an opening (215) for attaching the pipe clip (201) around the pipe, which opening (215) is delimited by a first and a second end of the clip body, a first and second flange (207, 205) being monolithically formed with the clip body at the first and second end respectively and extending in a radial direction,
- a male fastening element (213) comprising a head (213b) and a shank (213a), the shank (213a) being associated with the first end (207) and the head (213b) engaging the second end of the clip body for tightening the first and second end of the clip body together in a mounted state, and
- a washer (220) with an opening (227) for the shank (213a) of the male fastening element (213),
wherein the second flange (205) is provided with an opening (216) adapted to allow the head (213b) of the male fastening element (213) to pass through, and
wherein said washer (220) in a mounted state of the pipe clip (201) engages on one side the second flange (205) in an area surrounding said opening (216) in the second flange (205) and engages on an opposite side the head (213b) of the male fastening element (213),
**characterised in that**,
the washer (220) is a portion of the second flange (205) monolithically formed therewith,
the washer (220) in the mounted state of the pipe clip (201) surrounds the shank (213a) of the male fastening element (213), and
the washer (220) has a resilient portion having an opening (227), adapted to resiliently expand from an original dimension to a dimension which allows the head (213b) of the male fastening element (213) to pass through and adapted to resiliently return to the original dimension again such that the washer (220) engages behind said head (213b) when the head (213b) has passed through.

13. Pipe clip according to claim 12, wherein the washer (220) comprises a plate (221), wherein resilient lips (222) are formed which extend radially inward, wherein the free ends of said lips (222) define the opening (227) in the washer (220) for the shank (213a) of the male fastening element (213).

14. Pipe clip according to claim 13, wherein the plate (221) is an extension of the second flange (205) which is folded over the second flange (205), such that the opening (227) in the washer (220) and the opening (216) in the second flange (205) are aligned.

15. Pipe clip according to any one of claims 12 - 14, wherein at least the portion of the pipe clip where the second flange (205) is formed is made of a resilient metal, e.g. spring steel, wherein, preferably, the pipe clip body comprises two pipe clip halves (202, 203), wherein the pipe clip half (202) at which the second flange (205) is formed is made of a resilient metal, preferably spring steel.

## Patentansprüche

1. Rohrschelle (1) zum Befestigen eines Rohrs an einer Wand, an einer Decke oder an einem anderen Träger, wobei die Rohrschelle umfasst:
- einen ringförmigen Schellenkörper mit einer Öffnung (15) zum Befestigen der Rohrschelle (1) um das Rohr, wobei die Öffnung (15) durch ein erstes und durch ein zweites Ende des Schellenkörpers begrenzt ist, wobei ein erster und ein zweiter Flansch (7, 5) an dem ersten bzw. an dem zweiten Ende mit dem Schellenkörper monolithisch gebildet sind und in einer radialen Richtung verlaufen,
- ein Einsteckbefestigungselement (13), das einen Kopf (13b) und einen Schaft (13a) umfasst, wobei der Schaft (13a) dem ersten Ende zugeordnet ist und der Kopf (13b) mit dem zweiten Ende des Schellenkörpers in Eingriff ist, um das erste und das zweite Ende des Schellenkörpers in einem montierten Zustand zusammenzuziehen, und
- eine Unterlegscheibe (20) mit einer Öffnung für den Schaft (13a) des Einsteckbefestigungselements (13),
wobei der zweite Flansch (5) mit einer Öffnung (16) versehen ist, die dafür ausgelegt ist zu ermöglichen, dass der Kopf (13b) des Einsteckbefestigungselements (13) durchgeht, und
wobei die Unterlegscheibe (20) in einem montierten Zustand der Rohrschelle (1) auf einer Seite des zweiten Flanschs (5) in einem Bereich, der die Öffnung (16) in dem zweiten Flansch (5) umgibt, in Eingriff ist und auf einer gegenüberliegenden Seite mit dem Kopf (13b) des Einsteckbefestigungselements (13) in Eingriff ist,
**dadurch gekennzeichnet, dass**
die Unterlegscheibe (20) in einem offenen Zustand der Rohrschelle (1) als ein Ring, der den Schaft (13a) angrenzend an den Kopf (13b) des Einsteckbefestigungselements (13) umgibt, vormontiert ist, wobei die Unterlegscheibe (20) ein federndes Teil ist, das dafür ausgelegt ist, beim Durchgang durch die Öffnung (16) in dem zweiten Flansch (5) mit dem Kopf (13b) des Einsteckbefestigungselements (13) einer Verringerung ihres Außendurchmessers ausgesetzt zu werden, und dafür ausgelegt ist, sich wieder auszudehnen, nachdem sie durch die Öffnung (16) gegangen ist, um beim Zusammenziehen des ersten und des zweiten Endes des Schellenkörpers mit dem Bereich, der die Öffnung (16) umgibt, in Eingriff zu gelangen.

2. Rohrschelle nach Anspruch 1, wobei die Unterlegscheibe (20) einen Basisring (21) und federnde Lippen (22), die von dem Basisring (21) ausgehen, umfasst, wobei die Lippen (22) vorzugsweise einen kegelförmigen Ring bilden.

3. Rohrschelle nach Anspruch 2, die eines der folgenden Merkmale aufweist:
- Der Schaft (13a) des Einsteckbefestigungselements (13) weist ein Außengewinde auf und der Basisring (21) ist mit einem Innengewinde versehen, das dafür ausgelegt ist, mit dem Außengewinde an dem Schaft (13a) zusammenzuwirken;
- der Basisring (21) ist um den Schaft (13a) des Einsteckbefestigungselements (13) geklemmt;
- der Schaft (13a) des Einsteckbefestigungselements (13) weist einen Abschnitt mit einem Außengewinde und einen zwischen dem Kopf (13b) und dem Gewindeabschnitt verlaufenden gewindefreien Abschnitt auf, wobei der Basisring (21) in Verwendung koaxial mit dem gewindefreien Abschnitt verläuft.

4. Rohrschelle nach einem der Ansprüche 2-3, die eines der folgenden Merkmale aufweist:
- die Unterlegscheibe (20) ist aus Metall hergestellt;
- die Unterlegscheibe (20) ist aus Kunststoff hergestellt;
- die Unterlegscheibe (20) ist als ein Verbundmaterialteil aus Metall und Kunststoff hergestellt.

5. Rohrschelle nach einem der Ansprüche 1-4, wobei die Unterlegscheibe (20) z. B. durch Klemmen, durch Adhäsion oder durch Schweißen an dem Einsteckbefestigungselement (13) befestigt ist.

6. Rohrschelle (101) zum Befestigen eines Rohrs an einer Wand, an einer Decke oder an einem anderen Träger, wobei die Rohrschelle umfasst:
- einen ringförmigen Schellenkörper mit einer Öffnung (115) zum Befestigen der Rohrschelle (101) um das Rohr, wobei die Öffnung (115) durch ein erstes und durch ein zweites Ende des Schellenkörpers begrenzt ist, wobei ein erster und ein zweiter Flansch (107, 105; 105') an dem ersten bzw. an dem zweiten Ende mit dem Schellenkörper monolithisch gebildet sind und in einer radialen Richtung verlaufen,
- ein Einsteckbefestigungselement (113), das einen Kopf (113b) und einen Schaft (113a) umfasst, wobei der Schaft (113a) dem ersten Ende zugeordnet ist und der Kopf (113b) mit dem zweiten Ende des Schellenkörpers in Eingriff ist, um das erste und das zweite Ende des Schellenkörpers in einem montierten Zustand zusammenzuziehen, und
- eine Unterlegscheibe (120; 120') mit einer Öffnung (127; 127') für den Schaft (113a) des Einsteckbefestigungselements (113),
wobei der zweite Flansch (105; 105') mit einer Öffnung (116; 116') versehen ist, die dafür ausgelegt ist zu ermöglichen, dass der Kopf (113b) des Einsteckbefestigungselements (113) durchgeht, und
wobei die Unterlegscheibe (120; 120') in einem montierten Zustand der Rohrschelle (101) auf einer Seite des zweiten Flanschs (105; 105') in einem Bereich, der die Öffnung (116; 116') in dem zweiten Flansch (105; 105') umgibt, in Eingriff ist und auf einer gegenüberliegenden Seite mit dem Kopf (113b) des Einsteckbefestigungselements (113) in Eingriff ist,
**dadurch gekennzeichnet, dass**
die Unterlegscheibe (120; 120') an den zweiten Flansch (105) montiert ist,
die Unterlegscheibe (120; 120') den Schaft (113a) des Einsteckbefestigungselements (113) in dem montierten Zustand der Rohrschelle (101) umgibt, und
die Unterlegscheibe (120; 120') ein federndes Teil ist, das eine Öffnung (127; 127') aufweist, die dafür ausgelegt ist, sich aus einer ursprünglichen Dimension auf eine Dimension, die ermöglicht, dass der Kopf (113b) des Einsteckbefestigungselements (113) durchgeht, federnd auszudehnen, und die dafür ausgelegt ist, federnd wieder auf die ursprüngliche Dimension zurückzukehren, so dass die Unterlegscheibe (120; 120') hinter dem Kopf (113b) in Eingriff ist, wenn der Kopf (113b) durchgegangen ist.

7. Rohrschelle nach Anspruch 6, wobei die Unterlegscheibe (120; 120') einen Basisring (121; 121') und federnde Lippen (122; 122'), die von dem Basisring (121; 121') ausgehen, umfasst, wobei die federnden Lippen (122) vorzugsweise kegelförmig von dem Basisring (121) ausgehen.

8. Rohrschelle nach einem der Ansprüche 6-7, wobei die Unterlegscheibe (120) an einem Rand der Öffnung (116) in dem zweiten Flansch (105) befestigt ist.

9. Rohrschelle nach einem der Ansprüche 6-8, wobei der Basisring (121) einen Abschnitt aufweist, der durch die Öffnung (116) in dem zweiten Flansch (105) verläuft, wobei die Rohrschelle (101) vorzugsweise eines der folgenden Merkmale aufweist:
- Die Öffnung (116) in dem zweiten Flansch (105) ist mit einem Innengewinde (125) versehen und der Basisringabschnitt (121) der Unterlegscheibe (120) ist mit einem Außengewinde versehen, das dafür ausgelegt ist, mit dem Innengewinde (125) zusammenzuwirken;
- der Basisringabschnitt (121) weist eine oder mehrere nach außen verlaufende Nasen (126) auf, die hinter dem Rand der Öffnung (116) in dem zweiten Flansch (105) in Eingriff sind, wenn der Basisringabschnitt (121), z. B. durch eine Schnappverbindung, in die Öffnung (116) eingeführt ist, um den Basisring in der Öffnung zu befestigen;
- der Basisringabschnitt (121) weist einen Außendurchmesser auf, der in die Öffnung (116) in dem zweiten Flansch (105) eng eingepasst ist.

10. Rohrschelle nach Anspruch 7, wobei der Basisring (121') an einem Rand des Flanschs (105') befestigt ist, wobei die Rohrschelle darüber hinaus vorzugsweise eines oder mehrere der folgenden Merkmale aufweist:
- Der Basisring (121') ist mit Greifansätzen (129') versehen, die um einen oder mehrere Ränder des Flanschs (105') greifen;
- der Basisring (121') ist als eine Platte gebildet.

11. Rohrschelle nach einem der Ansprüche 6-10, wobei die federnden Lippen (122) einen segmentierten konischen Ring bilden, der eine konkave Seite aufweist, die zu dem zweiten Flansch (105; 105') gedreht ist und die in Verwendung mit dem Kopf (113b) des Einsteckbefestigungselements (113) in Eingriff ist, wenn der Kopf (113b) durch die Unterlegscheibe (120; 120') geht.

12. Rohrschelle (201) zum Befestigen eines Rohrs an einer Wand, an einer Decke oder an einem anderen Träger, wobei die Rohrschelle umfasst:
- einen ringförmigen Schellenkörper mit einer Öffnung (215) zum Befestigen der Rohrschelle (201) um das Rohr, wobei die Öffnung (215) durch ein erstes und durch ein zweites Ende des Schellenkörpers begrenzt ist, wobei ein erster und ein zweiter Flansch (207, 205) an dem ersten bzw. an dem zweiten Ende mit dem Schellenkörper monolithisch gebildet sind und in einer radialen Richtung verlaufen,
- ein Einsteckbefestigungselement (213), das einen Kopf (213b) und einen Schaft (213a) umfasst, wobei der Schaft (213a) dem ersten Ende (207) zugeordnet ist und der Kopf (213b) mit dem zweiten Ende des Schellenkörpers in Eingriff ist, um das erste und das zweite Ende des Schellenkörpers in einem montierten Zustand zusammenzuziehen, und
- eine Unterlegscheibe (220) mit einer Öffnung (227) für den Schaft (213a) des Einsteckbefestigungselements (113),
wobei der zweite Flansch (205) mit einer Öffnung (216) versehen ist, die dafür ausgelegt ist zu ermöglichen, dass der Kopf (213b) des Einsteckbefestigungselements (213) durchgeht, und
wobei die Unterlegscheibe (220) in einem montierten Zustand der Rohrschelle (201) auf einer Seite des zweiten Flanschs (205) in einem Bereich, der die Öffnung (216) in dem zweiten Flansch (205) umgibt, in Eingriff ist und auf einer gegenüberliegenden Seite mit dem Kopf (213b) des Einsteckbefestigungselements (213) in Eingriff ist,
**dadurch gekennzeichnet, dass**
die Unterlegscheibe (220) ein monolithisch damit gebildeter Abschnitt des zweiten Flanschs (205) ist,
die Unterlegscheibe (220) den Schaft (213a) des Einsteckbefestigungselements (213) in dem montierten Zustand der Rohrschelle (201) umgibt, und
die Unterlegscheibe (220) einen federnden Abschnitt mit einer Öffnung (227) aufweist, der dafür ausgelegt ist, sich von einer ursprünglichen Dimension auf eine Dimension, die ermöglicht, dass der Kopf (213b) des Einsteckbefestigungselements (213) durchgeht, federnd auszudehnen, und dafür ausgelegt ist, federn wieder in die ursprüngliche Dimension zurückzukehren, so dass die Unterlegscheibe (220) hinter dem Kopf (213b) in Eingriff ist, wenn der Kopf (213b) durchgegangen ist.

13. Rohrschelle nach Anspruch 12, wobei die Unterlegscheibe (220) eine Platte (221) umfasst, in der federnde Lippen (222) gebildet sind, die radial nach innen verlaufen, wobei die freien Enden der Lippen (222) die Öffnung (227) in der Unterlegscheibe (220) für den Schaft (213a) des Einsteckbefestigungselements (213) definieren.

14. Rohrschelle nach Anspruch 13, wobei die Platte (221) eine Verlängerung des zweiten Flanschs (205) ist, die in der Weise über den zweiten Flansch (205) gelegt ist, dass die Öffnung (227) in der Unterlegscheibe (220) und die Öffnung (216) in dem zweiten Flansch (205) ausgerichtet sind.

15. Rohrschelle nach einem der Ansprüche 12-14, wobei wenigstens der Abschnitt der Rohrschelle, wo der zweite Flansch (205) gebildet ist, aus einem federnden Metall, z. B. aus Federstahl, hergestellt ist, wobei der Rohrschellenkörper vorzugsweise zwei Rohrschellenhälften (202, 203) umfasst, wobei die Rohrschellenhälfte (202), bei der der zweite Flansch (205) gebildet ist, aus einem federnden Metall, vorzugsweise aus Federstahl, hergestellt ist.

## Revendications

1. Collier d'attache de tuyau (1) servant à fixer un tuyau à un mur, un plafond ou un autre support, ledit collier comprenant :
- un corps de collier annulaire pourvu d'un orifice (15) servant à fixer le collier d'attache de tuyau (1) autour du tuyau, lequel orifice (15) est délimité par des première et seconde extrémités du corps de collier, des première et seconde brides (7, 5) étant formées d'une seule pièce avec le corps de collier respectivement aux première et seconde extrémités, et s'étendant dans une direction radiale,
- un élément de fixation mâle (13) comprenant une tête (13b) et une tige (13a), la tige (13a) étant associée à la première extrémité et la tête (13b) s'engageant avec la seconde extrémité du corps de collier afin de serrer ensemble les première et seconde extrémités du corps de collier dans un état monté, et
- une rondelle (20) pourvue d'un orifice destiné à la tige (13a) de l'élément de fixation mâle (13),
dans lequel la seconde bride (5) est pourvue d'un orifice (16) adapté pour permettre le passage de la tête (13b) de l'élément de fixation mâle (13), et
dans lequel lorsque le collier d'attache de tuyau (1) est monté, ladite rondelle (20) s'engage sur un côté avec la seconde bride (5) dans une zone entourant ledit orifice (16) ménagé dans la seconde bride (5) et s'engage sur un côté opposé avec la tête (13b) de l'élément de fixation mâle (13), **caractérisé en ce que**
lorsque le collier d'attache de tuyau (1) est ouvert, la rondelle (20) est pré-montée sous la forme d'un collier entourant la tige (13a) adjacente à la tête (13b) de l'élément de fixation mâle (13), la rondelle (20) étant une pièce élastique adaptée pour être soumise à une réduction de son diamètre extérieur lors du passage à travers l'orifice (16) ménagé dans la seconde bride (5) avec la tête (13b) de l'élément de fixation mâle (13) et adaptée pour se dilater à nouveau après son passage à travers ledit orifice (16) de manière à s'engager avec la zone entourant ledit orifice (16) lors du serrage des première et seconde extrémités du corps de collier.

2. Collier d'attache de tuyau selon la revendication 1, dans lequel la rondelle (20) comprend une bague de base (21) et des lèvres élastiques (22) s'étendant depuis ladite bague de base (21), dans lequel les lèvres (22) forment de préférence un collier évasé.

3. Collier d'attache de tuyau selon la revendication 2, présentant l'une des caractéristiques suivantes :
- la tige (13a) de l'élément de fixation mâle (13) comporte un filetage extérieur et la bague de base (21) est pourvue d'un filetage intérieur adapté pour coopérer avec le filetage extérieur sur la tige (13a) ;
- la bague de base (21) est serrée autour de la tige (13a) de l'élément de fixation mâle (13) ;
- la tige (13a) de l'élément de fixation mâle (13) comporte une partie pourvue d'un filetage extérieur et une partie non filetée s'étendant entre la tête (13b) et la partie filetée, dans lequel la bague de base (21) s'étend en utilisation coaxialement à ladite partie non filetée.

4. Collier d'attache de tuyau selon l'une quelconque des revendications 2 à 3, présentant l'une des caractéristiques suivantes .
- la rondelle (20) est en métal ;
- la rondelle (20) est en matière plastique ;
- la rondelle (20) est réalisée sous la forme d'une pièce composite en métal et en matière plastique.

5. Collier d'attache de tuyau selon l'une quelconque des revendications 1 à 4, dans lequel la rondelle (20) est fixée à l'élément de fixation mâle (13), par exemple par serrage, par collage ou soudage.

6. Collier d'attache de tuyau (101) servant à fixer un tuyau à un mur, un plafond ou un autre support, ledit collier comprenant :
- un corps de collier annulaire pourvu d'un orifice (115) servant à fixer le collier d'attache de tuyau (101) autour du tuyau, lequel orifice (115) est délimité par des première et seconde extrémités du corps de collier, des première et seconde brides (107, 105 ; 105') étant formées d'une seule pièce avec le corps de collier respectivement aux première et seconde extrémités, et s'étendant dans une direction radiale,
- un élément de fixation mâle (113) comprenant une tête (113b) et une tige (113a), la tige (113a) étant associée à la première extrémité et la tête (113b) s'engageant avec la seconde extrémité du corps de collier afin de serrer ensemble les première et seconde extrémités du corps de collier dans un état monté, et
- une rondelle (120 ; 120') pourvue d'un orifice (127 ; 127') destiné à la tige (113a) de l'élément de fixation mâle (113), dans lequel la seconde bride (105 ; 105') est pourvue d'un orifice (116 ; 116') adapté pour permettre le passage de la tête (113b) de l'élément de fixation mâle (113), et
dans lequel lorsque le collier d'attache de tuyau (101) est monté, ladite rondelle (120 ; 120') s'engage sur un côté avec la seconde bride (105 ; 105') dans une zone entourant ledit orifice (116 ; 116') ménagé dans la seconde bride (105 ; 105') et s'engage sur un côté opposé avec la tête (113b) de l'élément de fixation mâle (113),
**caractérisé en ce que**
la rondelle (120 ; 120') est montée sur la seconde bride (105),
lorsque le collier d'attache de tuyau (101) est monté, la rondelle (120 ; 120') entoure la tige (113a) de l'élément de fixation mâle (113), et
la rondelle (120 ; 120') est une pièce élastique comportant un orifice (127 ; 127') adapté pour se dilater élastiquement d'une dimension initiale à une dimension qui permet le passage de la tête (113b) de l'élément de fixation mâle (113) et adapté pour revenir élastiquement à la dimension initiale de sorte que la rondelle {120 ; 120') s'engage en arrière de ladite tête (113b) après le passage de la tête (113b).

7. Collier d' attache de tuyau selon la revendication 6, dans lequel la rondelle (120 ; 120') comprend une bague de base (121 ; 121') et les lèvres élastiques (122 ; 122') s'étendant de ladite bague de base (121 ; 121'), dans lequel de préférence les lèvres élastiques (122) s'évasent depuis la bague de base (121).

8. Collier d'attache de tuyau selon l'une quelconque des revendications 6 à 7, dans lequel la rondelle (120) est fixée à un bord de l'orifice (116) ménagé dans la seconde bride (105).

9. Collier d'attache de tuyau selon l'une quelconque des revendications 6 à 8, dans lequel la bague de base (121) comporte une partie qui s'étend à travers l'orifice (116) ménagé dans la seconde bride (105), dans lequel de préférence le collier d'attache de tuyau (101) présente l'une des caractéristiques suivantes :
- l'orifice (116) ménagé dans la seconde bride (105) est pourvu d'un filetage intérieur (125), et ladite partie (121) de la bague de base de la rondelle (120) est pourvue d'un filetage extérieur adapté pour coopérer avec ledit filetage intérieur (125) ;
- ladite partie (121) de la bague de base a une ou plusieurs pattes (126), s'étendant vers l'extérieur, qui s'engagent en arrière du bord de l'orifice (116) ménagé dans la seconde bride (105) lorsque la partie (121) de la bague de base est insérée dans ledit orifice (116), par exemple par ajustement par encliquetage, de manière à fixer la bague de base dans ledit orifice ;
- ladite partie (121) de la bague de base a un diamètre extérieur qui s'ajuste sans serrage dans l'orifice (116) ménagé dans la seconde bride (105).

10. Collier d'attache de tuyau selon la revendication 7, dans lequel la bague de base (121') est fixée à un bord de la bride (105'), dans lequel le collier d'attache de tuyau présente en outre de préférence une ou plusieurs des caractéristiques suivantes :
- la bague de base (121') est pourvue de formations de préhension (129') qui s'accrochent autour d'un ou de plusieurs bords de la bride (105') ;
- la bague de base (121') est réalisée sous la forme d'une plaque.

11. Collier d'attache de tuyau selon l'une quelconque des revendications 6 à 10, dans lequel les lèvres élastiques (122) forment une bague conique segmentée qui possède une face concave qui est tournée vers la seconde bride (105 ; 105') et avec laquelle s'engage, en utilisation, la tête (113b) de l'élément de fixation mâle (113) lorsque ladite tête (113b) traverse la rondelle (120 ; 120').

12. Collier d'attache de tuyau (201) servant à fixer un tuyau à un mur, un plafond ou un autre support, ledit collier comprenant :
- un corps de collier annulaire pourvu d'un orifice (215) servant à fixer le collier d'attache de tuyau (201) autour du tuyau, lequel orifice (215) est délimité par des première et seconde extrémités du corps de collier, des première et seconde brides (207, 205) étant formées d'une seule pièce avec le corps de collier respectivement aux première et seconde extrémités, et s'étendant dans une direction radiale,
- un élément de fixation mâle (213) comprenant une tête (213b) et une tige (213a), la tige (213a) étant associée à la première extrémité (207) et la tête (213b) s'engageant avec la seconde extrémité du corps de collier afin de serrer ensemble les première et seconde extrémités du corps de collier dans un état monté, et
- une rondelle (220) pourvue d'un orifice (227) destiné à la tige (213a) de l'élément de fixation mâle (213),
dans lequel la seconde bride (205) est pourvue d'un orifice (216) adapté pour permettre le passage de la tête (213b) de l'élément de fixation mâle (213), et
dans lequel lorsque le collier d'attache de tuyau (201) est monté, ladite rondelle (220) s'engage sur un côté avec la seconde bride (205) dans une zone entourant ledit orifice (216) ménagé dans la seconde bride (205) et s'engage sur un côté opposé avec la tête (213b) de l'élément de fixation mâle (213),
**caractérisé en ce que**,
la rondelle (220) est une partie de la seconde bride (205) formée d'une seule pièce avec celle-ci,
lorsque le collier d'attache de tuyau (201) est monté, la rondelle (220) entoure la tige (213a) de l'élément de fixation mâle (213), et
la rondelle (220) comporte une partie élastique pourvue d'un orifice (227) adapté pour s'étendre élastiquement d'une dimension initiale à une dimension qui permet le passage de la tête (213b) de l'élément de fixation mâle (213) et adapté pour revenir élastiquement à la dimension initiale de telle sorte que la rondelle (220) s'engage en arrière de ladite tête (213b) après le passage de la tête (213b).

13. Collier d'attache de tuyau selon la revendication 12, dans lequel la rondelle (220) comprend une plaque (221), dans lequel des lèvres élastiques (222) sont formées qui s'étendent radialement vers l'intérieur, dans lequel les extrémités libres desdites lèvres (222) définissent l'orifice (227) ménagé dans la rondelle (220) de la tige (213a) de l'élément de fixation mâle (213).

14. Collier d'attache de tuyau selon la revendication 13, dans lequel la plaque (221) est une extension de la seconde bride (205) qui est repliée sur la seconde bride (205), de telle sorte que l'orifice (227) ménagé dans la rondelle (220) et l'orifice (216) ménagé dans la seconde bride (205) sont alignés.

15. Collier d'attache de tuyau selon l'une quelconque des revendications 12 à 14, dans lequel au moins la partie du collier d'attache de tuyau, où la seconde bride (205) est formée, est réalisée en un métal élastique, par exemple, en acier à ressort, dans lequel de préférence le corps de collier d'attache de tuyau comprenant deux moitiés de collier d'attache de tuyau (202, 203), dans lequel la moitié de collier d'attache de tuyau (202), où la seconde bride (205) est formée, est réalisée en un métal élastique, de préférence en acier à ressort.
